# EUROPÄISCHE PATENTSCHRIFT

(11) **EP 3 791 218 B1**
(45) Veröffentlichungstag und Bekanntmachung des Hinweises auf die Patenterteilung: **02.07.2025**
(21) Anmeldenummer: 19725655.5
(22) Anmeldetag: 08.05.2019
(51) Int. Cl.: G02B 5/08, G02B 7/18

(54) **SPIEGELTRÄGER FÜR EINEN OPTISCHEN SPIEGEL AUS EINEM VERBUNDWERKSTOFF UND VERFAHREN ZU DESSEN HERSTELLUNG**
MIRROR HOLDER FOR AN OPTICAL MIRROR MADE FROM A COMPOSITE MATERIAL, AND METHOD FOR THE PRODUCTION THEREOF
SUPPORT DE MIROIR POUR UN MIROIR OPTIQUE COMPOSÉ D'UN MATÉRIAU COMPOSITE ET PROCÉDÉ DE FABRICATION ASSOCIÉ

(30) Priorität: 09.05.2018 DE 102018111212
(43) Veröffentlichungstag der Anmeldung: 17.03.2021
(73) Patentinhaber: Fraunhofer-Gesellschaft zur Förderung der angewandten Forschung e.V., 80686 München (DE)
(72) Erfinder: KINAST, Jan, 07745 Jena (DE); RISSE, Stefan, 07745 Jena (DE)
(74) Vertreter: Epping - Hermann - Fischer
(86) Internationale Anmeldenummer: PCT/EP2019/061845
(87) Internationale Veröffentlichungsnummer: WO 2019/215243

(56) Entgegenhaltungen:
- EP-A1- 2 065 734
- WO-A1-2015/074677
- WO-A1-2016/170043
- WO-A2-2015/183619
- DE-B4- 102005 026 418
- DE-U1- 202013 010 638
- US-A- 5 045 972

## Beschreibung

Die Erfindung betrifft einen Spiegelträger aus einem Verbundwerkstoff, insbesondere einen Spiegelträger für einen optischen Spiegel wie z.B. einen Metallspiegel. Die Erfindung betrifft des Weiteren ein Verfahren zur Herstellung des Spiegelträgers.

In der optischen Mess- und Signaltechnik besteht ein starker Bedarf an Spiegeln mit komplexen Oberflächen (z.B. Freiform-Optiken, Asphären), an die in Bezug auf die Genauigkeit der Formgebung hohe Anforderungen gestellt werden. Gleichzeitig sollen sich die Spiegel durch ein geringes Gewicht und hohe Steifigkeit auszeichnen. Ein Spiegel umfasst typischerweise einen Spiegelträger mit der gewünschten Oberfläche, auf der eine oder mehrere Reflexionsschichten angeordnet sind. Die mindestens eine Reflexionsschicht wird vorzugsweise durch physikalische Dampfphasenabscheidung, beispielsweise mittels Sputtern, Bedampfen, ionengestützter Beschichtung oder Atomlagenabscheidung (Atomic Layer Deposition) aufgebracht. Spiegelträger aus z.B. Aluminium, Kupfer oder Messing werden z.B. mit einem Diamantwerkzeug zerspanend bearbeitet, bis die gewünschte Form der Oberfläche erreicht ist. Bekannte Verfahren der Ultrapräzisionsbearbeitung, wie z.B. Diamantdrehen oder -fräsen bieten so die Möglichkeit, Metalloptiken mit z.B. sphärischen, asphärischen oder freigeformten Oberflächen mit Formabweichungen (PV) < 200 nm bei einem Bauteildurchmesser von 100 mm und Rauheiten (RMS) im Bereich von 2 nm bis 5 nm herzustellen. Durch die Anwendung des Zerspanens ist die erreichbare Rauheit und Oberflächenformabweichung auf Werte beschränkt, die ggf. für Anwendungen im spektralen Infrarotbereich genügen, für kürzere Wellenlängen jedoch unzureichend sind.

Es ist bekannt, dass die Rauheit und Oberflächenformabweichung durch eine Fein- oder Korrekturpolitur vermindert werden können. Hierzu werden Spiegelträger mit einem Spiegelkörper, z.B. aus Aluminium mit einer Polierschicht, z.B. aus einer amorphen Nickel-Phosphor-Legierung verwendet, die der Politur unterzogen wird.

Die Materialien des Spiegelkörpers und der Polierschicht werden unter Bezug auf verschiedene thermische, mechanische oder fertigungstechnische Anforderungen ausgewählt. Während der Spiegelkörper, insbesondere für bewegliche optische Spiegel, leicht und dennoch formstabil sein soll, muss die Polierschicht polierbar und gegenüber den Umgebungsbedingungen {Sauerstoff, Feuchtigkeit) inert sein. Aus diesem Grund bestehen der Spiegelkörper und die Polierschicht in der Regel aus verschiedenen Materialien.

Nachteilig an der Kombination verschiedener Materialien ist, dass sich erhebliche Unterschiede der thermischen Längenausdehnungskoeffizienten ergeben können. Beispielsweise beträgt der thermische Längenausdehnungskoeffizient der verbreitet als Substratkörper verwendeten Aluminiumlegierung Al6061 (siehe z.B. WO 2004/077114 A1, US 6 350 176 B1) 23,8 * 10⁻⁶/K, während eine NiP-Polierschicht typischerweise einen thermischen Längenausdehnungskoeffizienten von 13,5 * 10⁻⁶/K aufweist.

Wenn optische Spiegel mit einem derart zusammengesetzten Spiegelträger bei der Anwendung einem Temperaturwechsel ausgesetzt sind, führen die verschiedenen thermischen Längenausdehnungskoeffizienten wie bei einem Bimetallelement zu Deformationen oder Spannungen, welche die optische Funktion erheblich beeinträchtigen und bis zum Funktionsausfall führen können.

Aufgrund der mechanischen Anforderungen an die Spiegelkörper sind bisher nur wenige Materialien für die Spiegelträger verfügbar, zu denen neben der oben genannten Aluminiumlegierung Al6061 auch weitere Aluminiumlegierungen sowie Beryllium und Berylliumlegierungen zählen. Die Verwendung von Beryllium kann problematisch sein, da Berylliumoxide giftig sind und das Rohmaterial sehr teuer ist. In der Praxis wird zur Vermeidung der oben genannten Fehlanpassung der thermischen Längenausdehnungskoeffizienten bisher versucht, die Polierschicht aus einem Material herzustellen, dessen thermischer Längenausdehnungskoeffizient an die Wärmeausdehnung des Spiegelkörpers angepasst ist. Der Nachteil dieses Konzepts besteht darin, dass Erfahrungen, die beim Polieren der üblicherweise verwendeten Materialien für Polierschichten, wie z.B. NiP vorliegen, nicht ohne Weiteres auf die Polierbearbeitung anderer Materialien übertragen werden können. Des Weiteren muss die Polierschicht mit den auf diesen abgeschiedenen Materialien der Reflexionsschichten verträglich sein.

In DE 10 2005 026 418 B4 wird ein Aluminiumverbundwerkstoff mit Siliziumpartikeln beschrieben, welcher, beschichtet mit einer amorphen NiP-Polierschicht, für optische Elemente verwendet wird.

Die Druckschrift EP 2 065 734 A1 beschreibt einen Spiegel zur Laserbearbeitung, bei dem ein Substrat aus einem Metall-Kohlenstoff-Verbund mit einer reflektierenden Schicht versehen wird.

Die Druckschrift WO 2015 / 074 677 A1 betrifft einen Leichtbau-Umlenkspiegel, beispielsweise für einen Galvanometer-Scanner, in numerisch optimierter Leichtbauweise.

In der Druckschrift WO 2016 / 170 043 A1 ist ein Verfahren zur Formgebung und/oder Formkorrektur eines optischen Elements angegeben, bei dem eine Abweichung einer Form einer optischen Funktionsfläche von einer Zielform bestimmt wird.

Eine zu lösende Aufgabe besteht darin, einen verbesserten Spiegelträger bereitzustellen, der insbesondere eine verbesserte Dimensions- und Temperaturstabilität, eine für die Anwendungen bewegter Spiegel ausreichend geringe Massendichte und eine hohe mechanische Stabilität aufweist. Weiterhin soll ein zur Herstellung des Spiegelträgers geeignetes Verfahren angegeben werden.

Diese Aufgaben werden durch einen Spiegelträger und ein Verfahren gemäß den unabhängigen Patentansprüchen gelöst. Vorteilhafte Ausführungsformen der Erfindung ergeben sich aus den abhängigen Ansprüchen.

Gemäß zumindest einer Ausführungsform umfasst der Spiegelträger einen Spiegelkörper und eine Polierschicht. Der Spiegelkörper weist einen Diamantpartikel verstärkten Aluminiumverbundwerkstoff auf, wobei der Aluminiumverbundwerkstoff einen vorbestimmten Gehalt an Diamantpartikeln aufweist. Der Gehalt an Diamantpartikeln beträgt vorteilhaft zwischen 5 Masse-% und 50 Masse-%, wobei unter dem "Gehalt an Diamantpartikeln" hier und im Folgenden der Massenanteil der Diamantpartikel in dem Aluminiumverbundwerkstoff zu verstehen ist. Die Diamantpartikel sind Diamantpartikel natürlichen oder synthetischen Ursprungs. Insbesondere weisen die Diamantpartikel polykristalline Strukturen (PCD, Polycristalline Diamond) auf. Dies unterscheidet die Diamantpartikel insbesondere von diamantartigem Kohlenstoff. Die Diamantpartikel weisen Größen von 1 µm bis 100 µm, vorzugsweise 20 µm bis 50 µm auf. Die Form der Diamantpartikel ist polygonal, rotationsellipsoidal, scharfkantig oder vorzugsweise sphäroidal.

Durch die in dem Aluminiumverbundwerkstoff enthaltenen Diamantpartikel wird ein hoher Wert des Elastizitätsmoduls und der Wärmeleitfähigkeit erreicht, was sowohl für Leichtgewichtsanwendungen als auch für die Einstellung einer hohen Formtreue von Vorteil ist. Auf dem Spiegelkörper ist eine Polierschicht angeordnet, die z.B. PVD-SiC, PVD-Si, CVD-Si, PECVD-SiO₂, PECVD-Si₃N₄, PVD-ZrO₂ oder vorzugsweise NiP aufweist.

Die Verwendung des Diamantpartikel verstärkten Aluminiumverbundwerkstoffs als Material für den Spiegelkörper hat insbesondere den Vorteil, dass eine hohe Wärmeleitfähigkeit und eine hohe Steifigkeit erzielt werden. Andererseits haben Diamantpartikel verstärkte Aluminiumverbundwerkstoffe mechanische Eigenschaften, welche die Herstellung eines Spiegelkörpers an sich nicht ohne weiteres ermöglichen. Insbesondere erlauben die vergleichsweise große Härte und die spröden Eigenschaften dieses Materials nicht ohne weiteres die mechanische Bearbeitung durch materialabtragende Verfahren wie zum Beispiel Fräsen oder Bohren. Die Erfindung macht insbesondere von der Idee Gebrauch, den Spiegelkörper durch additive Fertigung aus dem Diamantpartikel verstärkten Aluminiumverbundwerkstoff herzustellen. Dieses Herstellungsverfahren ermöglicht es vorteilhaft, einen monolithischen Spiegelkörper aus dem Diamantpartikel verstärkten Aluminiumverbundwerkstoff herzustellen, was mit herkömmlichen Verfahren nicht ohne weiteres möglich wäre. Die additive Fertigung ermöglicht es somit, das an sich aufgrund seiner die Herstellung erheblich erschwerenden Eigenschaften für Spiegelkörper nicht ohne weiteres verwendbare Material für diese Anwendung zugänglich zu machen, um so von den Vorzügen des Materials wie der Härte und den thermischen Eigenschaften zu profitieren.

Der Gehalt an Diamantpartikeln im Diamantpartikel verstärktem Aluminiumverbundwerkstoff ist so bemessen, dass eine Anpassung des thermischen Längenausdehnungskoeffizienten des Spiegelkörpers an den thermischen Längenausdehnungskoeffizienten der Polierschicht erreicht wird. Mit dem Begriff "Anpassung" wird hier eine derartige Annäherung der thermischen Längenausdehnungskoeffizienten bezeichnet, dass die Differenz zwischen den thermischen Längenausdehnungskoeffizienten des Spiegelkörpers und der Polierschicht kleiner 2,5 * 10⁻⁶/K, vorzugsweise kleiner als 1 * 10⁻⁶/K ist. Besonders bevorzugt sind Ausführungsformen der Erfindungen, bei denen die thermischen Längenausdehnungskoeffizienten des Spiegelkörpers und der Polierschicht im Wesentlichen gleich sind, so dass sie eine Differenz insbesondere kleiner 0,5 * 10⁻⁶/K aufweisen.

Die Anpassung des thermischen Längenausdehnungskoeffizienten des Spiegelkörpers an den thermischen Längenausdehnungskoeffizienten der Polierschicht hat den Vorteil, dass der Spiegelträger hohen thermischen Belastungen, insbesondere thermischen Gradientenbelastungen, widersteht.

Gemäß einer bevorzugten Ausführungsform der Erfindung besteht der Spiegelkörper aus einem Diamantpartikel verstärktem Aluminiumverbundwerkstoff mit einem derartigen Gehalt an Diamantpartikeln, dass der thermische Längenausdehnungskoeffizient im Temperaturbereich von -180 °C bis +100 °C, vorzugsweise im Bereich von -40 °C bis +60 °C, im Bereich von 10 * 10⁻⁶/K bis 16 * 10⁻⁶/K liegt. Mit einem derartigen Spiegelkörper wird eine besonders gute Anpassung an typischerweise verwendete Materialien von Polierschichten erzielt.

Der Gehalt an Diamantpartikeln im Aluminiumverbundwerkstoff beträgt insbesondere zwischen 5 Masse-% und 50 Masse-%, besonders bevorzugt zwischen 10 Masse-% und 20 Masse-%. Ein Gehalt an Diamantpartikeln in diesem Bereich ermöglicht zum einen die Anpassung des thermischen Längenausdehnungskoeffizienten an den der Polierschicht. Außerdem können durch den Gehalt an Diamantpartikeln die Wärmeleitfähigkeit, die Wärmekapazität und die mechanische Steifigkeit verbessert werden.

Eine Variation des Gehalts an Diamantpartikeln ermöglicht bei dem Aluminiumverbundwerkstoff eine Anpassung an verschiedene mögliche Materialien der Polierschicht. Besonders bevorzugt eine Ausführungsform, bei der die Polierschicht aus einer Nickel-Phosphor-Legierung gebildet ist, die vorteilhaft einen thermischen Längenausdehnungskoeffizienten von 11 * 10⁻⁶/K bis 14 * 10⁻⁶/K aufweist. Die Verwendung einer NiP-Polierschicht besitzt den besonderen Vorteil, dass beim Polieren dieses Materials weitreichende Erfahrungen bestehen. Der Spiegelträger kann somit denselben Polierprozeduren unterzogen werden, wie sie von herkömmlichen Spiegelträgern bekannt sind.

Die Polierschicht weist bei einer bevorzugten Ausgestaltung eine RMS-Rauheit von weniger als 5 nm auf. Auf diese Weise wird insbesondere eine hohe Reflektivität erzielt. Wenn der Spiegelträger eine Polierschicht mit einer RMS-Rauheit aufweist, die kleiner oder gleich 1 nm ist, ergeben sich weitere Vorteile für die Anwendung eines mit dem Spiegelträger ausgestatteten Spiegels für Wellenlängen im sichtbaren Spektralbereich oder kürzeren Wellenlängen.

Der Spiegelträger dient insbesondere zur Herstellung eines Spiegels, insbesondere eines optischen Spiegels. Der Spiegel weist den Spiegelträger und eine darauf aufgebrachte Reflexionsschicht, zum Beispiel eine Metallschicht, auf. Die Spiegelschicht kann mehrere Teilschichten aufweisen, beispielsweise Metallschichten und/oder dielektrische Schichten.

Bei dem erfindungsgemäßen Verfahren zur Herstellung des Spiegelträgers wird ein Spiegelkörper, der einen Diamantpartikel verstärkten Aluminiumverbundwerkstoff aufweist, durch additive Fertigung hergestellt und nachfolgend eine Polierschicht auf den Spiegelkörper aufgebracht, wobei der Gehalt an Diamantpartikeln im Aluminiumverbundwerkstoff zwischen 5 Masse-% und 50 Masse-%, insbesondere zwischen 10 Masse-% und 30 Masse-%, beträgt und so gewählt ist, dass der thermische Längenausdehnungskoeffizient des Spiegelkörpers an den thermischen Längenausdehnungskoeffizienten der Polierschicht angepasst ist.

Wie bereits erwähnt, ermöglicht die additive Fertigung die Herstellung eines monolithischen Spiegelkörpers aus dem Aluminiumverbundwerkstoff mit einem Gehalt an Diamantpartikeln im Bereich von 5 Masse-% bis 50 Masse-%, obwohl dieses Material aufgrund der Härte und seiner spröden Eigenschaften nur schwer zu bearbeiten ist. Bei der additiven Fertigung werden vorteilhaft keine materialabtragenden Verfahren eingesetzt, vielmehr wird der Spiegelkörper endkonturnah schichtweise, durch z.B. Selektives Laserschmelzen, erzeugt, insbesondere auf Basis eines CAD-Modells.

Bei einer bevorzugten Ausgestaltung erfolgt die additive Fertigung durch selektives Laserschmelzen. Beim selektiven Laserschmelzen wird der Diamantpartikel verstärkte Aluminiumverbundwerkstoff in Pulverform mit einem Rakel schichtweise aufgebracht und mittels Laserstrahlung lokal vollständig in festes Material umgeschmolzen. Anschließend wird erneut eine Pulverlage aufgetragen und mittels Laserstrahlung umgeschmolzen. Dieser Zyklus wird solange wiederholt, bis der gesamte Spiegelkörper aus einer Vielzahl lokal umgeschmolzener Pulverlagen hergestellt ist.

Bei der Herstellung des Spiegelkörpers durch additive Fertigung, insbesondere selektives Laserschmelzen, können vorteilhaft Leichtgewichtsstrukturen, Kühlstrukturen und/oder Tragstrukturen in den Spiegelkörper integriert werden, ohne dass dafür ein zusätzlicher Herstellungsschritt erforderlich ist. Integrierte Kühlstrukturen können für flüssige oder gasförmige Medien vorgesehen werden.

Gemäß einer bevorzugten Ausführungsform wird der Spiegelträger, d.h. der Verbund aus dem Spiegelkörper und der Polierschicht, einer thermischen Behandlung unterzogen. Auf diese Weise kann vorteilhafterweise eine dimensionale Stabilisierung der Materialpaarung aus dem Spiegelkörper und der Polierschicht erreicht werden. Die thermische Behandlung erfolgt vorzugsweise in einem Temperaturbereich von 150 °C bis 200 °C. Bei der thermischen Behandlung in diesem Temperaturbereich können noch vorhandene Restspannungen weitgehend beseitigt werden, sodass der mit dem Spiegelträger hergestellte Spiegel eine hohe Stabilität und Reproduzierbarkeit der optischen Eigenschaften aufweist. Vorzugsweise folgt nach der thermischen Behandlung ein Polieren der Polierschicht, um die gewünschte Form des Spiegelträgers mit einer minimierten Rauheit herzustellen.

Die für den Spiegelträger beschriebenen vorteilhaften Ausgestaltungen gelten auch für das Verfahren und umgekehrt.

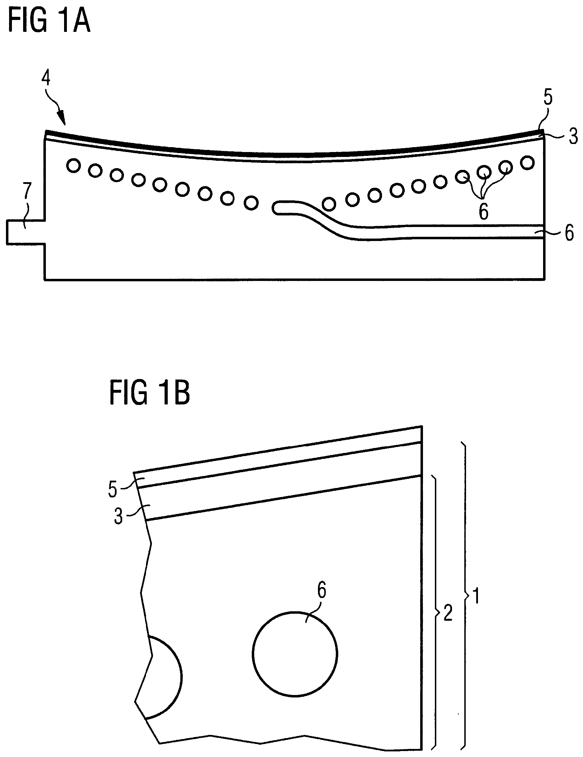

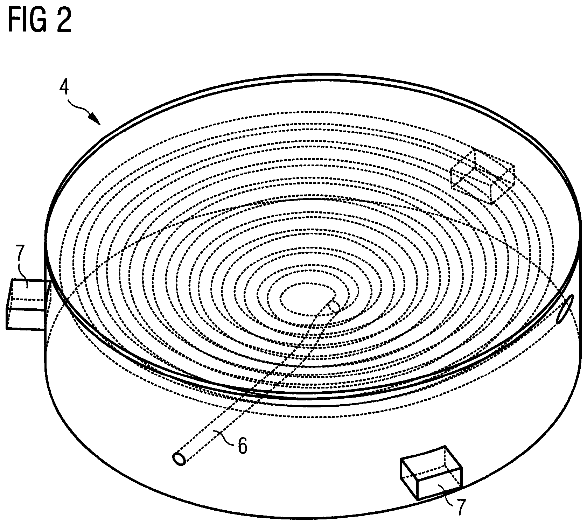

Weitere Einzelheiten und Vorteile der Erfindung werden aus der folgenden Beschreibung der Figuren 1 und 2 ersichtlich.

Es zeigen:
Figur 1A eine schematische Schnittansicht eines Spiegels mit dem Spiegelträger gemäß einem ersten Ausführungsbeispiel,
Figur 1B einen Ausschnitt des Spiegels mit dem Spiegelträger gemäß dem ersten Ausführungsbeispiel, und
Figur 2 eine schematische Ansicht eines Spiegels mit dem Spiegelträger gemäß einem weiteren Ausführungsbeispiel.

Der optische Spiegel 4 gemäß dem Ausführungsbeispiel der Figuren 1A und 1B weist einen Spiegelträger 1 und eine Reflexionsschicht 5 auf. Der Spiegelträger 1 umfasst einen Spiegelkörper 2 und eine Polierschicht 3, die eine NiP-Legierung aufweist. Der optische Spiegel 4 der Figur 2 weist eine innenliegende Kühlstruktur 6 und eine Tragstruktur 7 auf.

Bei dem Ausführungsbeispiel ist der Spiegel 4 ein optischer Spiegel mit einer sphärischen Oberfläche. Die Umsetzung der Erfindung ist nicht auf diese Spiegelform beschränkt, sondern auch mit planen oder asphärisch gekrümmten Spiegeln oder Freiform-Spiegeln möglich. Die hierin vorgeschlagene additive Fertigung des Spiegelträgers ist besonders vorteilhaft, um den Spiegelträger mit einer sphärisch oder asphärisch gekrümmten Form oder einer Freiform herzustellen, da dies mit herkömmlichen Fertigungsverfahren (z.B. Gießen) aufgrund der mechanischen Eigenschaften des Diamantpartikel verstärkten Aluminiumverbundwerkstoffs sehr schwierig ist. Zusätzlich ist durch die additive Fertigung eine Massereduzierung des Spiegelträgers möglich, indem beispielsweise Ausnehmungen oder Hohlräume mit sehr geringen Wandstärken, z.B. 0,1 mm bis 1 mm, in dem Spiegelträger erzeugt werden, die mit herkömmlichen Herstellungsverfahren nicht ohne weiteres realisierbar sind.

Der Spiegelkörper 2 besteht aus einem Diamantpartikel verstärkten Aluminiumverbundwerkstoff mit einem Gehalt an Diamantpartikeln, welcher einen an die NiP-Polierschicht angepassten thermischen Längenausdehnungskoeffizienten bewirkt. Die Polierschicht 3 besteht aus einer chemisch oder galvanisch hergestellten amorphen Nickel-Phosphor-Legierung mit einer Phosphorkonzentration von 10 Masse-% bis 15 Masse-% (vorzugsweise > 10,5 Masse-%, z.B. 12 Masse-%) und weist eine Dicke von etwa 10 µm bis 2000 µm auf.

Der Spiegel 4 wird beispielsweise wie folgt hergestellt. Zunächst wird der Spiegelkörper 2 aus einem Diamantpartikel verstärkten Aluminiumverbundwerkstoff mittels additiver Fertigung (vorzugsweise Selektives Laserschmelzen) erzeugt. Dabei wird ein homogenes Pulvergemisch, bestehend aus Al6061-und Diamantpulver verwendet. Die konkrete Auswahl des Gehalts an Diamantpartikeln basiert auf den verfügbaren Materialdaten des verwendeten Verbundwerkstoffs.

Bei der Verwendung einer Polierschicht, z.B. PVD-SiC, PVD-Si, CVD-Si, PECVD-SiO₂, PECVD-Si₃N₄, PVD-ZrO₂ oder vorzugsweise chemisch hergestelltem NiP, mit einer Schichtdicke von < 200 µm wird eine Fläche des Rohlings bearbeitet. Der Rohling kann mit herkömmlichen Hartmetallwerkzeugen oder Diamantwerkzeugen (z.B. PKD-Werkzeugen aus polykristallinem Diamant) ultrapräzise bearbeitet werden. Da die erfindungsgemäß verwendeten Verbundwerkstoffe im Vergleich zu herkömmlichen Spiegelkörpern einen hohen Anteil an sprödharten Einlagerungen aufweisen und daher relativ spröde sind, werden bei der spanenden Bearbeitung geringe Schnitttiefen und geringe Vorschübe bevorzugt eingestellt.

Durch die Verwendung einer Polierschicht, bspw. galvanisch hergestelltem NiP, mit einer Schichtdicke von > 200 µm, kann eine spanende Nachbearbeitung des Rohlings vermieden werden.

Nachfolgend kann eine thermische Behandlung erfolgen, um eingebrachte Spannungen zu reduzieren. Die thermische Behandlung erfolgt vorzugsweise für eine Dauer von 6 h bei 350 °C.

In einem weiteren Schritt erfolgt die Abscheidung der Polierschicht 3. Die Abscheidung der Polierschicht 3 kann insbesondere durch einen galvanischen oder elektrochemischen Prozess erfolgen. Die Abscheidung umfasst vorzugsweise ein stromloses Vernickeln. Hierzu wird zuerst die Oberfläche des Spiegelkörpers 2 gereinigt, aktiviert und anschließend der Abscheidung unterzogen. Nachdem die Polierschicht 3 aufgebracht ist, folgt eine weitere thermische Behandlung, beispielsweise für 6 h bei 150 °C, um Schichtspannungen im Materialverbund des Spiegelträgers 1 zu reduzieren. Nachfolgend kann eine Abschlusspolitur erfolgen, wobei eine RMS-Oberflächenrauheit von weniger als 5 nm, vorzugsweise von weniger als 1 nm, hergestellt wird.

Zur Herstellung eines Spiegels 4 mit dem Spiegelträger 1 wird in einem weiteren Schritt eine Reflexionsschicht 5 auf der Polierschicht 3 abgeschieden, vorzugsweise durch physikalische Dampfphasenabscheidung. Die Reflexionsschicht 5 kann eine Einzelschicht sein oder mehrere Teilschichten aufweisen. Die Reflexionsschicht 5 kann beispielsweise eine Metallschicht sein. Alternativ kann die Reflexionsschicht 5 ein Vielschichtsystem sein, beispielsweise ein dielektrisches Interferenzschichtsystem oder eine Kombination aus einer oder mehreren Metallschichten mit einer oder mehreren dielektrischen Schichten.

In Figur 2 ist ein weiteres Ausführungsbeispiel eines optischen Spiegels 4 dargestellt. Der optische Spiegel weist eine innenliegende Kühlstruktur 6 und eine Tragstruktur 7 auf. Weitere Ausgestaltungen des Spiegels 4 und des darin enthaltenen Spiegelträgers sowie das Verfahren zu dessen Herstellung können dem ersten Ausführungsbeispiel entsprechen und werden deshalb nicht nochmals erläutert.

Die in der vorstehenden Beschreibung, den Zeichnungen und den Ansprüchen offenbarten Merkmale der Erfindung können sowohl einzeln als auch in Kombination für die Verwirklichung der Erfindung in verschiedenen Ausgestaltungen von Bedeutung sein.

## Patentansprüche

1. Spiegelträger (1), umfassend:
- einen Spiegelkörper (2), der einen Diamantpartikel verstärkten Aluminiumverbundwerkstoff aufweist, und
- eine Polierschicht (3), die auf dem Spiegelkörper (2) angeordnet ist,
wobei der Gehalt an Diamantpartikeln im Aluminiumverbundwerkstoff zwischen 5 Masse-% und 50 Masse-% beträgt und so gewählt ist, dass der thermische Längenausdehnungskoeffizient des Spiegelkörpers (2) an den thermischen Längenausdehnungskoeffizienten der Polierschicht (3) angepasst ist,
**dadurch gekennzeichnet, dass** der gesamte Spiegelkörper (2) durch additive Fertigung aus einer Vielzahl lokal umgeschmolzener Pulverlagen besteht und eine Kühlstruktur (6) in den Spiegelkörper (2) integriert ist.

2. Spiegelträger nach Anspruch 1,
wobei der Gehalt an Diamantpartikeln im Aluminiumverbundwerkstoff so gewählt ist, dass der thermische Ausdehnungskoeffizient des Spiegelkörpers (2) bei Temperaturen von -180 °C bis 100 °C im Bereich von 3 * 10⁻⁶/K bis 20 * 10⁻⁶/K liegt.

3. Spiegelträger nach einem der vorhergehenden Ansprüche, wobei der Gehalt an Diamantpartikeln im Aluminiumverbundwerkstoff zwischen 10 Masse-% und 20 Masse-% beträgt.

4. Spiegelträger nach einem der vorhergehenden Ansprüche,
bei dem eine Tragstruktur (7) in den Spiegelkörper (2) integriert ist.

5. Spiegelträger nach einem der vorhergehenden Ansprüche, bei dem eine Leichtgewichtsstruktur in den Spiegelkörper (2) integriert ist.

6. Spiegelträger nach einem der vorhergehenden Ansprüche, bei dem die Polierschicht (3) NiP, SiC, Si, SiO₂, Si₃N₄, oder ZrO₂ aufweist.

7. Spiegelträger nach einem der vorhergehenden Ansprüche, bei dem die Polierschicht (3) eine Oberfläche mit einer RMS-Rauheit von höchstens 5 nm aufweist.

8. Spiegel (4), umfassend einen Spiegelträger (1) nach einem der vorhergehenden Ansprüche,
wobei mindestens eine Reflexionsschicht (5) auf der Polierschicht (3) angeordnet ist.

9. Verfahren zur Herstellung eines Spiegelträgers (1), mit den Schritten:
- Herstellen eines Spiegelkörpers (2), der einen Diamantpartikel verstärkten Aluminiumverbundwerkstoff aufweist, durch additive Fertigung, und
- Aufbringen einer Polierschicht (3) auf den Spiegelkörper (2),
wobei der Gehalt an Diamantpartikeln im Aluminiumverbundwerkstoff zwischen 5 Masse-% und 50 Masse-% beträgt und so gewählt ist, dass der thermische Längenausdehnungskoeffizient des Spiegelkörpers (2) an den thermischen Längenausdehnungskoeffizienten der Polierschicht (3) angepasst ist und wobei der gesamte Spiegelkörper (2) durch die additive Fertigung aus einer Vielzahl lokal umgeschmolzener Pulverlagen hergestellt wird und eine Kühlstruktur (6) in den Spiegelkörper (2) integriert wird.

10. Verfahren nach Anspruch 9,
bei dem die additive Fertigung durch selektives Laserschmelzen erfolgt.

11. Verfahren nach einem der Ansprüche 9 oder 10,
bei dem bei der additiven Fertigung eine Tragstruktur in den Spiegelkörper (2) integriert wird.

12. Verfahren nach einem der Ansprüche 9 bis 11,
mit dem weiteren Schritt:
- Thermische Behandlung des Verbundes aus dem Spiegelkörper (2) und der Polierschicht (3) bei einer Temperatur im Bereich von 130 °C bis 200 °C.

13. Verfahren nach einem der Ansprüche 9 bis 12, mit dem weiteren Schritt:
- Polieren der Oberfläche der Polierschicht (3), so dass sie einen RMS-Rauheitswert kleiner als 5 nm aufweist.

## Claims

1. A mirror support (1), comprising:
- a mirror body (2) comprising a diamond particle reinforced aluminum composite material, and
- a polishing layer (3), which is arranged on the mirror body (2)
wherein the content of diamond particles in the aluminum composite material is between 5 % by mass and 50 % by mass and is selected such that the thermal coefficient of linear expansion of the mirror body (2) is adapted to the thermal coefficient of linear expansion of the polishing layer (3), **characterized in that** the entire mirror body (2) is produced by additive manufacturing from a plurality of locally remelted powder layers and a cooling structure (6) is integrated into the mirror body (2).

2. The mirror support according claim 1,
wherein the content of diamond particles in the aluminum composite material is selected such that the coefficient of thermal expansion of the mirror body (2) at temperatures of -180 °C to 100 °C is in the range of 3 * 10⁻⁶/K to 20 * 10⁻⁶/K.

3. The mirror support according to any of the preceding claims,
wherein the content of diamond particles in the aluminum composite material is between 10 % by mass and 20 % by mass.

4. The mirror support according to any of the preceding claims,
in which a supporting structure (7) is integrated into the mirror body (2).

5. The mirror support according to any of the preceding claims,
in which a lightweight structure is integrated into the mirror body (2).

6. The mirror support according to any of the preceding claims,
in which the polishing layer (3) comprises NiP, SiC, Si, SiO₂, Si₃N₄, or ZrO₂.

7. The mirror support according to any of the preceding claims,
in which the polishing layer (3) comprises a surface with an RMS roughness of at most 5 nm.

8. A mirror (4) comprising a mirror support (1) according to any of the preceding claims,
wherein at least one reflection layer (5) is arranged on the polishing layer (3).

9. A method for producing a mirror support (1), comprising the steps:
- producing a mirror body (2) comprising a diamond particle reinforced aluminum composite material by additive manufacturing, and
- applying a polishing layer (3) on the mirror body (2), wherein the content of diamond particles in the aluminum composite material is between 5 % by mass and 50 % by mass and is selected such that the thermal coefficient of linear expansion of the mirror body (2) is adapted to the thermal coefficient of linear expansion of the polishing layer (3) and wherein the entire mirror body (2) is produced by additive manufacturing from a plurality of locally remelted powder layers and a cooling structure (6) is integrated into the mirror body (2).

10. The method according to claim 9,
in which additive manufacturing is achieved by selective laser melting.

11. The method according to one of claims 9 or 10,
in which a supporting structure is integrated into the mirror body (2) during additive manufacturing.

12. The method according to any of claims 9 to 11,
with the further step:
- thermal treatment of the composite of the mirror body (2) and the polishing layer (3) at a temperature in the range of 130 °C to 200 °C.

13. The method according to any of claims 9 to 12, with the further step:
- polishing the surface of the polishing layer (3) so that it comprises an RMS roughness value of less than 5 nm.

## Revendications

1. Un support de miroir (1), comprenant :
- un corps de miroir (2) qui comprend un matériau composite en aluminium renforcé par des particules de diamant, et
- une couche de polissage (3), qui est disposée sur le corps de miroir (2),
la teneur en particules de diamant dans le matériau composite d'aluminium étant comprise entre 5 % en masse et 50 % en masse et étant choisie de telle sorte que le coefficient de dilatation thermique linéaire du corps de miroir (2) soit adapté au coefficient de dilatation thermique linéaire de la couche de polissage (3),
**caractérisé en ce que** tout le corps de miroir (2) est constitué par fabrication additive d'une pluralité de couches de poudre refondues localement et qu'une structure de refroidissement (6) est intégrée dans le corps de miroir (2).

2. Le support de miroir selon la revendication 1,
la teneur en particules de diamant dans le matériau composite d'aluminium étant choisie de manière que le coefficient de dilatation thermique du corps de miroir (2) se situe dans la plage de 3 * 10 6/K à 20 * 10-6/K pour des températures de - 180 °C à 100 °C.

3. Le support de miroir selon l'une des revendications précédentes,
la teneur en particules de diamant dans le matériau composite d'aluminium étant comprise entre 10 % et 20 % en masse.

4. Le support de miroir selon l'une des revendications précédentes,
dans lequel une structure porteuse (7) est intégrée dans le corps du miroir (2).

5. Le support de miroir selon l'une des revendications précédentes,
dans lequel une structure légère est intégrée dans le corps du miroir (2).

6. Le support de miroir selon l'une des revendications précédentes,
dans lequel la couche de polissage (3) comprend du NiP, SiC, Si, SiO₂, Si3N4 ou ZrO2.

7. Le support de miroir selon l'une des revendications précédentes,
dans lequel la couche de polissage (3) présente une surface avec une rugosité RMS de 5 nm au maximum.

8. Un miroir (4) comprenant un support de miroir (1) selon l'une des revendications précédentes,
dans lequel au moins une couche réfléchissante (5) est disposée sur la couche de polissage (3).

9. Un procédé de fabrication d'un support de miroir (1), comprenant les étapes suivantes :
- fabrication par fabrication additive d'un corps de miroir (2) qui comprend un matériau composite en aluminium renforcé par des particules de diamant, et
- application d'une couche de polissage (3) sur le corps de miroir (2),
la teneur en particules de diamant dans le matériau composite d'aluminium étant comprise entre 5 % en masse et 50 % en masse et étant choisie de telle sorte que le coefficient de dilatation thermique linéaire du corps de miroir (2) soit adapté au coefficient de dilatation thermique linéaire de la couche de polissage (3) et tout le corps de miroir (2) étant fabriqué par la fabrication additive à partir d'une pluralité de couches de poudre refondues localement et une structure de refroidissement (6) étant intégrée dans le corps de miroir (2).

10. Le procédé selon la revendication 9,
dans lequel la fabrication additive est réalisée par fusion sélective au laser.

11. Le procédé selon l'une des revendications 9 ou 10,
dans lequel, lors de la fabrication additive, une structure porteuse est intégrée dans le corps du miroir (2).

12. Le procédé selon l'une des revendications 9 à 11, comprenant l'étape supplémentaire suivante :
- traitement thermique du composite formé par le corps de miroir (2) et la couche de polissage (3) à une température comprise entre 130°C et 200°C.

13. Le procédé selon l'une quelconque des revendications 9 à 12, comprenant l'étape supplémentaire suivante :
- polir la surface de la couche de polissage (3) de manière qu'elle présente une valeur de rugosité RMS inférieure à 5 nm.
